(19) Europäisches Patentamt
European Patent Office
Office européen des brevets

(11) **EP 2 416 507 B1**

(12) **EUROPEAN PATENT SPECIFICATION**

(45) Date of publication and mention
of the grant of the patent:
**11.04.2018 Bulletin 2018/15**

(51) Int Cl.:
***H04B 17/00*** *(2015.01)*          ***H04B 17/11*** *(2015.01)*
***H04B 17/21*** *(2015.01)*          ***H04B 17/309*** *(2015.01)*

(21) Application number: **09842520.0**

(22) Date of filing: **30.11.2009**

(86) International application number:
**PCT/CN2009/075226**

(87) International publication number:
**WO 2010/111864 (07.10.2010 Gazette 2010/40)**

(54) **METHOD AND SYSTEM FOR ANTENNA CALIBRATION**

VERFAHREN UND SYSTEM ZUR ANTENNENKALIBRATION

PROCÉDÉ ET SYSTÈME D'ÉTALONNAGE D'ANTENNE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **03.04.2009   CN 200910134214**

(43) Date of publication of application:
**08.02.2012   Bulletin 2012/06**

(73) Proprietor: **ZTE Corporation
Shenzhen, Guangdong 518057 (CN)**

(72) Inventor: **LU, Chenhong
Guangdong 518057 (CN)**

(74) Representative: **Appleyard Lees IP LLP
15 Clare Road
Halifax HX1 2HY (GB)**

(56) References cited:
**EP-A2- 1 031 845          CN-A- 1 988 410
CN-A- 101 031 129          CN-A- 101 064 902
CN-A- 101 188 448          US-A1- 2007 037 519
US-A1- 2008 310 529**

**Description**

Technical Field

The present invention relates to the field of communication, and especially, to a method and system for antenna calibration.

Background of the Related Art

To date, in order to reduce the co-channel interference, increase the cell edge throughput and coverage in the orthogonal frequency division multiplexing-time division duplex (OFDM-TDD) system, multi-antenna beam forming technology with relatively small distance between the array elements is introduced in the eNodeB. In order to guarantee the accuracy and reliability of the forming, the antenna array must be calibrated to reduce the error in amplitude and phase in each channel of the array.

In the prior art, the antenna calibration technology in the orthogonal frequency division multiplexing (OFDM) system is mainly: after receiving the frequency domain pilot sequence transmitted by each transmitting antenna, jointly estimating the frequency domain response of each transmitting antenna channel at the receiving end, and then compensating the difference in the frequency domain responses of different reflecting antennae, so as to achieve the frequency domain calibration of transmitting electronic channel of each transmitting antenna; in addition, when simultaneously calibrating several transmitting channels, the inter-channel interference can be reduced by using a way of frequency division or code division.

However, since the channel used in the antenna calibration is the same as that used in the communication system, in order to not affect the normal operation of the communication system, the calibration detection pilot signal should be transmitted when there is no communication data transmitted. According to the time slot structure of the time division duplex (TDD), the calibration detection pilot signal is generally selected to be transmitted in the guard period (GP) between the downlink pilot time slot (DwPTS) and the Uplink Pilot Time Slot (UpPTS). However, echoes of the downlink signal in the DwPTS might interfere with the calibration signal in the GP, thus affect the calibration effect. In the prior art, cyclic prefix is added to reduce the interference and influence due to the channel tailing, and select the length of the cyclic prefix to reduce the influence of the calibration pilot symbol on the downlink pilot echo, and the longer a cyclic prefix is added, the more likely the effective calibration pilot symbol will be located in the rear of the idle time slot, thus by reasonably selecting the length of the cyclic prefix, the interference can be located only in the cyclic prefix signal.

The abovementioned processing method only considers reducing the interference from the DwPTS, but does not consider that increasing the length of the cyclic prefix might extend the effective calibration pilot signal to the UpPTS, which not only affects the normal uplink communication, but also reduces the calibration precision. Meanwhile, when there is a random access signal that is transmitted in advance, there is mutual interference between the calibration pilot signal and the random access signal.

The document CN101188448A discloses an intelligent antenna calibration method, as well as the device and the system thereof, and estimates the frequency response of the corresponding sub carrier wave position of each transmitting antenna and the channel impact response length of each transmitting antenna according to the received pilot symbols; the maximum value of the channel impact response length and the frequency response of each transmitting antenna are used for the interpolation on the positions of the sub carrier wave without the estimation of frequency response; according to the interpolated frequency response, the compensation coefficient of each transmitting antenna is worked out, and each transmitting antenna gets compensated correspondingly according to the compensation coefficient so as to lead the frequency response of each transmitting channel to be identical.

The document US2007037519A1 discloses an apparatus and method for calibrating transmission paths in a multicarrier communication system using multiple antennas. In the transmission path calibrating apparatus, a calibration processor generates reference signal to estimate distortions in phase and amplitude in transmission paths, allocates the generated reference signals to subcarriers which are different in each of the transmission paths, and calculates calibration vectors for the transmission paths using the generated reference signals and received reference signals received through the transmission paths. A baseband module IFFT-processes the generated reference signals allocated to the subcarriers and send the IFFT signals in the transmission paths.

The document US2008310529A1 discloses a radio transmitting apparatus includes a calibration reference signal generator for generating a calibrated reference signal for each of the subcarriers to be calibrated, a subcarrier modulator for modulating the calibration reference signal with the subcarrier, a radio transmitter for frequency-convert-transmission signals in a radio frequency band, a radio receiver for frequency-converting the transmission signal in the radio frequency band supplied from the radio transmitter, into a baseband signal, a calibration coefficient measurer for calculating a calibration coefficient from the baseband signal output from the radio receiver, and a calibration coefficient multiplier for multiplying a transmission signal for each of the subcarriers and each of the antenna elements, by the calculated calibration coefficient.

Summary of the Invention

The present invention is proposed since the calibration detection pilot signal interferes with the normal communication in the communication system in the prior art; therefore, the main purpose of the present invention is to provide a method and system for antenna calibration, so as to solve the abovementioned problem in the prior art.

In order to achieve the purpose of the present invention, the present invention provides a method for antenna calibration according to claim 1. Preferably, the transmitting end grouping the sub-carrier frequency points in the transmitting antenna specifically comprises: the transmitting end groups the sub-carrier frequency points in at least one transmitting antenna.

Preferably, when there are at least two transmitting antennae, after the transmitting end sends the time domain signal to the receiving end, the abovementioned method further comprises: the receiving end superimposes the time domain transmitting signals into one receiving calibration channel to receive.

Preferably, the transmitting end groups the sub-carrier frequency points in the transmitting antennae, and it specifically comprises: determining the number of groups of grouping the sub-carrier frequency points; grouping each sub-carrier frequency point in sequence in the order from the first group to the last group according to the frequency size of the sub-carrier frequency point, and if the number of sub-carrier frequency points is greater than the number of groups, allocating the rest sub-carrier frequency points in sequence from the first group to the last group again; determining the number of sub-carrier frequency points in each group.

Preferably, the total number of the sub-carrier frequency points can be exactly divided by the number of the groups.

Preferably, the number of groups is 4 or 8.

Preferably, the transmitting end determines the frequency domain calibration pilot signal of the transmitting antenna according to the grouping, and the procedure specifically comprises: the transmitting end determines the basic sequence according to the number of sub-carrier frequency points in each group, and determines the frequency domain calibration pilot signal of the transmitting antenna according to the basic sequence.

Preferably, when carrying out multi-channel simultaneous transmission calibration, the abovementioned method also comprises: the transmitting end uses a way of code division multiplexing to determine the frequency domain calibration pilot signal of each calibration channel.

Preferably, the pilot sequence of the code division multiplexing is Zadoff chu basic sequence. The transmitting end acquires the time domain integrated calibration pilot signal according to the frequency domain calibration pilot signal, and uses the time domain integrated calibration pilot signal to construct the time domain transmitting signal and sends it to the receiving end, and it specifically comprises: the transmitting end maps the frequency domain calibration pilot signal to the corresponding grouped sub-carrier frequency points, and fills locations of the rest unmapped sub-carrier frequency points with zero value to acquire the frequency domain signal of the transmitting antenna; the transmitting end coverts the frequency domain signal of the transmitting antenna to the time domain integrated calibration pilot signal of the transmitting antenna; the transmitting end segments the time domain integrated calibration pilot signal of the transmitting antenna according to the number of groups, and selects any segment of signal as the effective calibration signal; the transmitting end carries out an operation of filling zeros before and after the effective calibration signal to construct the time domain transmitting signal of the transmitting antenna; the transmitting end sends the time domain transmitting signal to the receiving end.

Preferably, the receiving end recovered the time domain integrated calibration pilot signal according to the received time domain transmitting signal, and it comprises: the receiving end carries out an operation of removing the zeros on the time domain transmitting signal to acquire the effective calibration signal, and the receiving end carries out recovery processing on the effective calibration signal to acquire the time domain integrated calibration pilot signal.

Preferably, the receiving end acquiring the frequency domain response of each group according to the recovered time domain integrated calibration pilot signal comprises: the receiving end converts the recovered time domain integrated calibration pilot signal to a frequency domain signal; the receiving end acquires the frequency domain response of each group in the calibration channel according to the frequency domain pilot of each group in the calibration channel.

Preferably, the receiving end acquiring the frequency domain response of each group according to the recovered time domain integrated calibration pilot signal further comprises: after superimposing the recovered time domain integrated calibration pilot signal of each group, the receiving end performs fast Fourier Transform on the signal to acquire the frequency domain signal, and estimates the frequency response of the corresponding sub-carriers of each group in the calibration channel according to the frequency domain pilot of each group in the calibration channel; or, the receiving end carries out fast Fourier transform on the recovered time domain integrated calibration pilot signal of each group to acquire the frequency domain signal of each group, and estimates the frequency response of the corresponding sub-carrier of each group according to the frequency domain pilot of each group in the calibration channel.

Preferably, the receiving end acquiring the frequency domain responses of all sub-carrier frequency points according to the frequency domain response of each group in the calibration channel comprises: the receiving end directly combines the frequency domain response of the frequency point corresponding to each sub-carrier frequency point group for each calibration channel to acquire the frequency domain responses of all sub-carriers; or, for each calibration channel, the receiving end uses the determined frequency response to interpolate the sub-carrier frequency points without frequency response for the frequency response of sub-carrier frequency points in each group, and averages several frequency responses corresponding to each sub-carrier frequency point to acquire the frequency domain responses of all sub-carriers; or, the receiving end selects the frequency response of sub-carrier frequency points in one group for each calibration channel and uses the determined frequency response to interpolate the sub-carrier frequency points without frequency responses to acquire the frequency domain responses of all sub-carriers.

Preferably, after the receiving end acquiring the frequency domain responses of all sub-carriers according to the frequency domain response of each group in the calibration channel, the abovementioned method also comprises: the receiving end repeats the operation of acquiring the frequency domain response of each group and the frequency domain responses of all sub-carriers to acquire the several frequency domain responses of all sub-carriers; the receiving end averages the several frequency domain responses of all sub-carriers to acquire a mean value of the several frequency domain responses of all sub-carriers.

Preferably, the receiving end determining the compensation coefficient of the calibration channel according to the frequency domain response of all sub-carriers comprises: the receiving end determines the compensation coefficient of the calibration channel according to the mean value.

Preferably, after the receiving end determining the compensation coefficient of the calibration channel according to the mean value, the abovementioned method also comprises: the receiving end correspondingly compensates the calibration channel according to the compensation coefficient.

In order to achieve the abovementioned purpose, the other aspect of the present invention is to provide a system for antenna calibration according to claim 17. The transmitting end comprises: a frequency domain calibration pilot sequence generation unit used to group the sub-carrier frequency points of at least one transmitting antenna and determine the frequency domain calibration pilot signals of at least one transmitting antenna according to the grouping; a frequency domain calibration pilot sequence mapping unit, used to map the frequency domain calibration pilot signal to the corresponding grouped sub-carrier frequency points to acquire the frequency domain signals of at least one transmitting antenna; a first conversion unit, used to covert the frequency domain signal to the time domain integrated calibration pilot signals of at least one transmitting antenna; a time domain transmitting signal generation unit ,used to segment the time domain integrated calibration pilot signal, and select any segment of signal as the effective calibration signal and construct the time domain transmitting signals of at least one transmitting antenna.

The receiving end comprises: a time domain calibration pilot recovery unit, used to restore the time domain transmitting signal to the time domain integrated calibration pilot signal; a second conversion unit, used to covert the time domain integrated calibration pilot signal to the frequency domain signal; a sub-carrier frequency response estimation unit, used to determine the frequency domain response of each group according to the frequency domain signal; a channel frequency response synthesizing unit, used to determine the frequency domain responses of all sub-carrier frequency points in at least one calibration channel according to the frequency domain response of each group; a channel frequency response smoothing unit, used to carry out an average operation on frequency domain responses of all sub-carrier frequency points in at least one calibration channel which are acquired many times, to acquire the mean value of frequency domain responses of all sub-carriers of at least one calibration channel; a compensation coefficient determination unit, used to determine the compensation coefficients of at least one calibration channel according to the mean value of several calibration channels.

With the technical scheme of the present invention, by grouping the sub-carriers to construct a regular time domain calibration pilot signal, the calibration pilot time domain transmitting time length can be reduced, so as to solve the problem that the calibration detection pilot signal interferes with the normal communication of the communication system in the prior art, so that the transmission of the antenna calibration pilot signal can avoid the influence of the DwPTS and the UpPTS and improve the calibration estimation precision without affecting the normal communication.

Brief Description of Drawings

FIG. 1 is a flow chart of the method for antenna calibration in accordance with an example of the present invention;

FIG. 2 is a schematic diagram of the transmitting end grouping the sub-carrier frequency points in each transmitting antenna in accordance with an example of the present invention;

FIG. 3 is a flow chart of the detailed processing in the method for antenna calibration in accordance with an example of the present invention;

FIG. 4 is a block diagram of the system for antenna calibration in accordance with an example of the present invention.

Preferred Embodiments of the Present Invention

In order to solve the problem that the calibration detection pilot signal interferes with the normal communication of the communication system in the prior art, the present invention provides a method and system for antenna calibration, and in the technical scheme of the present invention, regularly group the sub-carrier frequency points of the transmitting antenna, and estimate the frequency response of one group of sub-carrier at one time, and synthesize the frequency response of each group to calculate and acquire the compensation coefficient of each transmitting antenna, wherein, the compensation coefficient is used to correspondingly compensate each transmitting antenna. Since the sub-carrier frequency points of the transmitting antenna are regularly grouped, the time domain signal to be transmitted by the transmitting antenna has a certain regularity, therefore, it only needs to select the signal in a corresponding part of time segment therein to transmit during the practical transmission, on the other hand, the time domain signal transmitted by the transmitting antenna in the GP comprises three parts: the first part is filled with zero value to protect the practical calibration signal from being affected by the DwPTS signal; the second part is the selected time domain calibration signal segment; and the third part is also filled with zero value to avoid the mutual interference between the UpPTS signal and the random access signal transmitted in advance.

The preferred example of the present invention will be described in combination with the accompanying figures below, and it should be understood that, the preferred example described here is only used to illustrate and explain the present invention rather than restrict the present invention.

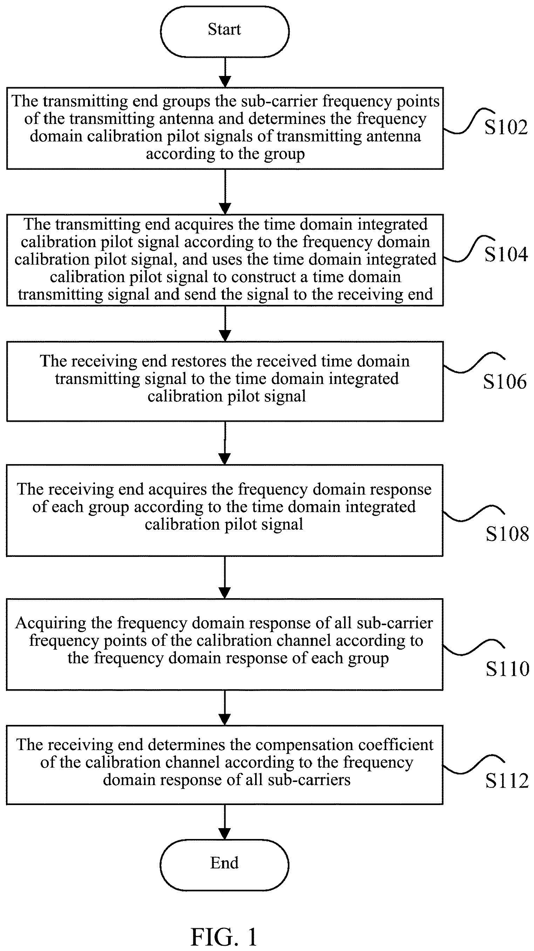

The example of the present invention provides a method for antenna calibration, and FIG. 1 is a flow chart of the method for antenna calibration in accordance with an example of the present invention, and as shown in FIG. 1, the method comprises the following steps:

S102: the transmitting end regularly groups the sub-carrier frequency points of the transmitting antennae and determines the frequency domain calibration pilot signal of each transmitting antenna according to the group, wherein, the transmitting end might comprises one or more transmitting antennae.

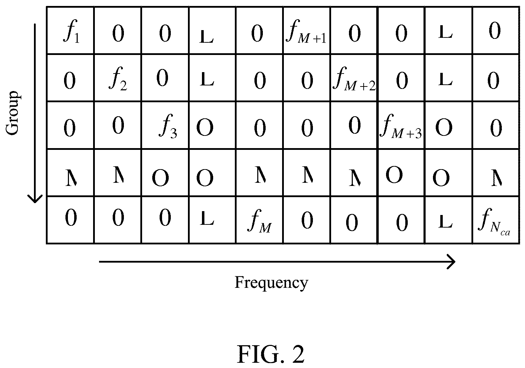

Specifically, as shown in FIG. 2, FIG. 2 is a schematic diagram of the transmitting end regularly grouping the sub-carrier frequency points of each transmitting antenna in accordance with an example of the present invention, and the transmitting end regularly groups the sub-carrier frequency points of each transmitting antenna according to FIG. 2. The transmitting end needs to firstly determine the number of groups of grouping sub-carrier frequency points, wherein, the number of total sub-carrier frequency points of the transmitting antenna can be exactly divided by the number of groups, preferably, the number of groups might be 4 or 8. Afterwards, according to the frequency size of the sub-carrier frequency point, the transmitting end groups each sub-carrier frequency point in sequence according to the order from the first group to the last group, and if the number of sub-carrier frequency points is greater than the number of groups, allocate the rest sub-carrier frequency points from the first group to the last group in sequence again. As shown in FIG. 2, suppose that the number of total sub-carrier frequency points is $N_{ca}$ and the number of groups is M, then allocate the sub-carrier frequency point $f_1$ to the first group, the sub-carrier frequency point $f_2$ to the second group, the sub-carrier frequency point $f_3$ to the third group and so on, the sub-carrier frequency point $f_M$ to the $M^{th}$ group; restart to allocate to the first group from $f_{M+1}$, that is, allocate the sub-carrier frequency point $f_{M+1}$ to the first group, the sub-carrier frequency point $f_{M+2}$ to the second group, the sub-carrier frequency point $f_{M+3}$ to the third group, and the sub-carrier frequency point $f_{Nca}$ to the $M^{th}$ group; finally, the transmitting end also needs to determine the number of sub-carrier frequency points in each group, and the number of sub-carrier frequency points in each group is $N_{ca}$ divided by M.

Wherein, the transmitting end determining the frequency domain calibration pilot signal of each transmitting antenna according to the grouping is specifically: the transmitting end determines the basic sequence according to the number of sub-carrier frequency points in each sub-carrier frequency point group, that is, the length of the basic sequence equals the number of sub-carrier frequency points in each group; and determine the frequency domain calibration pilot signal of each transmitting antenna according to the basic sequence.

In addition, when the transmission calibration is multi-channel simultaneous calibration, the method for generating the frequency domain pilot signal of each transmitting antenna is preferred to be but not limited to the code division multiplexing, wherein, the basic sequence of the code division multiplexing is preferably the Zadoff chu basic sequence.

After step S102, for each sub-carrier frequency point group of one or more transmitting antennae, execute the following steps S104~S106 on each sub-carrier frequency point group from the first sub-carrier frequency point group.

S104: the transmitting end acquires the time domain integrated calibration pilot signal according to the frequency domain calibration pilot signal, and uses the time domain integrated calibration pilot signal to construct a time domain transmitting signal and send the signal to the receiving end.

Specifically, S104 comprises the following processing:

1. From the first sub-carrier frequency point group, the transmitting end maps the frequency domain calibration pilot signal of each transmitting antenna to the corresponding sub-carrier frequency point in the grouped sub-carrier frequency point group, and fills the positions of the rest unmapped sub-carrier frequency points with zero value to acquire the frequency domain signal of each transmitting antenna;

2. The transmitting end carries out Inverse Fast Fourier Transform (IFFT) on the frequency domain signal of each transmitting antenna to acquire the time domain integrated calibration pilot signal of each transmitting antenna;

3. The transmitting end groups the time domain integrated calibration pilot signal of each transmitting antenna according to the number of groups, for example, if the number of groups is M, the time domain integrated calibration pilot signal of each transmitting antenna is segmented into M segments, and any segment of signal therein is selected as an effective calibration signal;

4. The transmitting end fills zeros before and after the effective calibration signal to construct the time domain transmitting signal of each transmitting antenna; wherein, filling zeros before and after the effective calibration signal can avoid the interference from the DwPTS and the conflict with the UpPTS and the random access signal transmitted in advance, and the length of the filled zeros can be adjusted by changing the number of sub-carrier groups;

5. The transmitting end sends the time domain transmitting signal to the receiving end.

S106: the receiving end receives the time domain transmitting signal in the receiving calibration channel and recovers the time domain integrated calibration pilot signal according to the received time domain transmitting signal.

Preferably, in the condition that there are at least two transmitting antennae, the receiving end superimposes the time domain transmitting signals in a receiving calibration channel to receive; afterwards, the receiving end recovers the time domain integrated calibration pilot signal according to the received time domain transmitting signal and acquires the frequency domain response of each group according to the recovered time domain integrated calibration pilot signal. Specifically, after the transmitting end sends the time domain transmitting signal to the receiving end, the receiving end carries out an operation of removing zeros on the time domain transmitting signal to acquire an effective calibration signal; and use the effective calibration signal to carry out recovery according to the regularity of the time domain integrated calibration pilot signal to acquire the time domain integrated calibration pilot signal of each transmitting antenna.

S108: repeat step 104 to step 106, and after acquiring the time domain integrated calibration pilot signal of each group of each transmitting antenna, convert to the frequency domain signal of the corresponding sub-carrier of each group of each transmitting antenna, and use the relevant algorithm to estimate the frequency responses of corresponding sub-carriers of each group of each transmitting antenna according to the frequency domain pilot of each transmitting antenna.

In step 108, estimating the frequency response of the corresponding sub-carriers of each group of each transmitting antenna comprises but not limited to the following two estimation methods:

1: for each receiving antenna, after superimposing the time domain integrated calibration pilot signal of each group, carry out Fast Fourier Transform (FFT) to convert to the frequency domain signal of the receiving antenna, and then use the relevant algorithm to estimate the frequency response of the corresponding sub-carriers of each group according to the frequency domain pilot of each group in the calibration channel;

2: carry out FFT on the time domain integrated calibration pilot signal of each group of each receiving antenna to convert to the frequency domain signal of the group of the receiving antenna, and then use the relevant algorithm to estimate the frequency response of the corresponding sub-carrier of each group according to the frequency domain pilot of each group.

S110: the receiving end acquires the frequency domain response of all sub-carrier frequency points of each calibration channel according to the frequency domain response of each group.

In S110, the method for synthesizing the estimated frequency response of each sub-carrier group to acquire the frequency response of all sub-carriers of each calibration channel comprises but not limited to the following three synthesizing methods:

1. For each calibration channel, directly combine the estimated frequency responses of the corresponding frequency points of various sub-carrier groups to acquire the frequency response of all sub-carriers;

2. For each calibration channel, and for the estimated frequency response of each sub-carrier group, use the estimated frequency response to interpolate the sub-carrier frequency points without frequency response, and average multiple frequency responses corresponding to each sub-carrier;

3. For each calibration channel, select the estimated frequency response of one sub-carrier group, and use the estimated frequency response to interpolate the sub-carrier frequency points without frequency response, to acquire the frequency response of all sub-carriers.

After S110, it also needs to estimate and smooth the frequency response of the sub-carriers of each calibration channel, and specifically, the transmitting end and receiving end need to repeat the operation of acquiring the frequency domain response of each group and the frequency domain response of all sub-carriers to acquire several frequency domain responses of each sub-carrier; the receiving end averages the several frequency domain responses of each sub-carrier to acquire the average frequency domain response value of each sub-carrier, that is to say, repeat steps S 104-S 108 for N times to acquire N estimated frequency responses of each sub-carrier of each calibration channel, and average n estimated values to acquire the smoothed frequency response of all sub-carriers of each calibration channel.

S112: the receiving end determines the compensation coefficient of each calibration channel according to the frequency domain response of all sub-carriers, wherein, the compensation coefficient is used to correspondingly compensate each calibration channel. Preferably, in the condition of estimating and smoothing the frequency response of the sub-carriers of each calibration channel, the receiving end can determine the compensation coefficient of each calibration channel according to the mean value.

The abovementioned technical scheme of the present invention will be described in detail in combination with examples below.

In related technology, multi-antenna calibration is divided into reception calibration and transmission calibration. Wherein, the transmission calibration is further divided into multi-antenna alternate transmission calibration, multi-antenna simultaneous transmission calibration and multi-antenna group and alternate transmission calibration. The reception calibration means the transmitting end using one antenna to send the calibration pilot signal, and the receiving end receives signal with several antennae at the same time, and each receiving antenna corresponds to one receiving calibration channel to acquire the frequency domain response of the receiving antenna, so as to determine the compensation coefficient. The multi-antenna alternate transmission calibration means that the transmitting end transmits the calibration pilot signal alternately with several transmitting antennae, and only one antenna can be used to transmit the calibration pilot signal at one time, and the receiving end uses one receiving antenna to receive; the transmission calibration of multi-antenna simultaneous calibration means that the transmitting end uses several transmitting antennae to send calibration pilot signals at the same time, and the receiving end uses one receiving antenna to receive the superimposed signal from several transmitting antennae; the multi-antenna group and alternate transmission calibration means dividing the multiple transmitting antennae in the transmitting end into several groups, and each group comprises at least one transmitting antenna, and several groups alternately transmit the calibration pilot signal, and multiple antennae of only one group can transmit the calibration pilot signal simultaneously at one time, and the receiving end uses one receiving antenna to receive the superimposed signal from several transmitting antennae of one group.

From the above description, it can be seen that for the transmitting antenna at each time in the multi-antenna group and alternate transmission calibration and multi-antenna alternate transmission calibration, it is equivalent to the total number of transmitting antennae in the transmission calibration of multi-antenna simultaneous calibration being reduced or 1, thus the multi-antenna group and alternate transmission calibration and multi-antenna alternate transmission calibration can be considered as a special case of the transmission calibration of multi-antenna simultaneous calibration. Moreover, relative to the multi-antenna alternate transmission calibration, the reception calibration is equivalent to a case that the total number of transmitting antennae in the transmission calibration of multi-antenna simultaneous calibration is 1, and there are several receiving antennae.

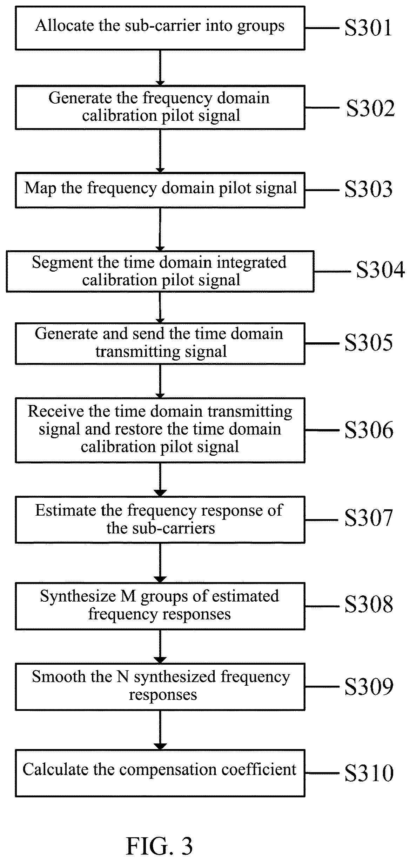

In the following, take the multi-antenna simultaneous transmission calibration for example to describe the implementation of the technical scheme in detail in combination with FIG. 3:

1. The transmitting end generates the frequency domain calibration pilot signal of each transmitting antenna.

S301: suppose that the total number of sub-carrier frequency points in the transmitting antenna is $N_{ca}$, and evenly divide the $N_{ca}$ into M groups, and the number of sub-carrier frequency points of each group is $N_{cr}$, and the allocation method is shown in FIG. 2.

S302: generate a Zadoff_chu basic sequence with a length of $N_{cr}$, and the frequency domain calibration pilot signal of each transmitting antenna can be acquired by phase shifting of the basic sequence with different $\alpha_i$. Suppose that the generated Zadoff_chu basic sequence is $\bar{r}(n)$, and the frequency domain calibration pilot signal $r^{(i)}(n)$ of each transmitting antenna might be represented as:

$$r^{(i)}(n) = e^{j\alpha_i n}\bar{r}(n), \quad 0 \leqslant n < N_{cr}$$

$$\alpha_i = 2\pi\frac{i}{N_{ant}},$$

Wherein, the phase shifting parameter of each channel: $i$ corresponds to the index number of each transmitting antenna, $N_{ant}$ controls the phase different of the pilot sequence of each transmitting antenna, $N_{ant}$ should be greater than the number of transmitting antennae during simultaneous calibration and satisfies $N_{cr} \bmod N_{ant} = 0$.

2. The transmitting end executes the following steps on frequency domain calibration pilot signal of each group according to the group order:

S303: the transmitting end maps the frequency domain calibration pilot signal.

Map the frequency domain calibration pilot signal $r^{(i)}(n)$ of each transmitting antenna to the corresponding sub-carrier according to the sub-carrier allocation schematic diagram shown in FIG. 2, and the positions of rest sub-carriers are filled with zero value to acquire the frequency domain signal of each transmitting antenna, and the frequency domain signal of the $M^{th}$ group of the $i^{th}$ transmitting antenna is $X_{i\_m}(k)$.

S304: the transmitting end segments the time domain integrated calibration pilot signal.

Carry out IFFT on the frequency domain signal $X_{i\_m}(k)$ of each transmitting antenna to acquire the corresponding time domain integrated calibration pilot signal $x_{i\_m}(n)$. And then segment the time domain integrated calibration pilot signal according to the number of groups, and select any segment of signal as the effective calibration signal to be transmitted. The effective calibration signal sequence $y_{i\_m}(n)$ to be transmitted in the $i^{th}$ transmitting antenna is:

$$y_{i\_m}(n) = x_{i\_m}(n + (q-1) \times N_{cr}/M), \quad n = 1,2\ldots,N_{cr}/M \text{ ,wherein, } q \text{ indicates the}$$

wherein, $q$ indicates the selected segmental index number.

S305: the transmitting end generates and sends the time domain transmitting signal.

Fill zeros before and after the effective calibration signal sequence $y_{i\_m}(n)$ in the selected time domain segment to construct the time domain transmitting signal $s_{i\_m}(n)$ of each transmitting antenna and send the signal. $s_{i\_m}(n)$ can be denoted as:

$$s_{i\_m}(n) = \begin{cases} 0 & n \leq N_{DW} \\ y_{i\_m}(n - N_{DW}) & N_{DW} < n \leq N_{cr}/4 + N_{DW} \\ 0 & N_{cr}/4 + N_{DW} < n \leq N_{GP} \end{cases}$$

Wherein, $N_{DW}$ denotes the number of sampling points used to avoid the DwPTS interference time segment, $N_{GP}$ denotes the number of sampling points in the whole GP.

Changing the number of sub-carrier groups M can change the length of time segment used to avoid the DwPTS interference and also avoid the confliction with the UpPTS and the random access signal transmitted in advance.

S306: the receiving end recovers the time domain integrated calibration pilot signal according to the received time domain signal.

Remove zeros in the received time domain signal $s'_m(n)$ to acquire the received effective time domain calibration signal $y'_m(n)$:

$$y'_m(n) = s'_m(n)(n + N_{DW}), n = 1, 2 \ldots, N_{cr}/M$$

And then recover the integrated time domain calibration signal $x'_m(n)$ according to the regularity of the time domain integrated calibration pilot signal. Take M=4, and q=1 for example, for the first group of pilot signals:

$$x'_1(n) = \begin{cases} y'_m(n) & n \le N_{cr}/4 \\ y'_m(n - N_{cr}/4) & N_{cr}/4 < n \le N_{cr}/2 \\ y'_m(n - N_{cr}/2) & N_{cr}/2 < n \le 3 \times N_{cr}/4 \\ y'_m(n - 3 \times N_{cr}/4) & 3 \times N_{cr}/4 < n \le N_{cr} \end{cases}$$

For the second group of pilot signals:

$$x'_2(n) = \begin{cases} y'_m(n) & n \le N_{cr}/4 \\ -\mathrm{Im}\left[y'_m(n - N_{cr}/4)\right] + j\mathrm{Re}\left[y'_m(n - N_{cr}/4)\right] & N_{cr}/4 < n \le N_{cr}/2 \\ -\mathrm{Re}\left[y'_m(n - N_{cr}/2)\right] - j\mathrm{Im}\left[y'_m(n - N_{cr}/2)\right] & N_{cr}/2 < n \le 3 \times N_{cr}/4 \\ \mathrm{Im}\left[y'_m(n - 3 \times N_{cr}/4)\right] - j\mathrm{Re}\left[y'_m(n - 3 \times N_{cr}/4)\right] & 3 \times N_{cr}/4 < n \le N_{cr} \end{cases}$$

For the third group of pilot signals:

$$x'_3(n) = \begin{cases} y'_m(n) & n \le N_{cr}/4 \\ -y'_m(n - N_{cr}/4) & N_{cr}/4 < n \le N_{cr}/2 \\ y'_m(n - N_{cr}/2) & N_{cr}/2 < n \le 3 \times N_{cr}/4 \\ -y'_m(n - 3 \times N_{cr}/4) & 3 \times N_{cr}/4 < n \le N_{cr} \end{cases}$$

For the fourth group of pilot signals:

$$x'_4(n) = \begin{cases} y'_m(n) & n \le N_{cr}/4 \\ \mathrm{Im}\left[y'_m(n - N_{cr}/4)\right] - j\mathrm{Re}\left[y'_m(n - N_{cr}/4)\right] & N_{cr}/4 < n \le N_{cr}/2 \\ -\mathrm{Re}\left[y'_m(n - N_{cr}/2)\right] - j\mathrm{Im}\left[y'_m(n - N_{cr}/2)\right] & N_{cr}/2 < n \le 3 \times N_{cr}/4 \\ -\mathrm{Im}\left[y'_m(n - 3 \times N_{cr}/4)\right] + j\mathrm{Re}\left[y'_m(n - 3 \times N_{cr}/4)\right] & 3 \times N_{cr}/4 < n \le N_{cr} \end{cases}$$

$j = \sqrt{-1}$ in all above equations.

3. Acquire the frequency response of each group of each transmitting calibration channel.

S307: the transmitting end estimates the frequency response of each group of each transmitting calibration channel (that is, the channel from each transmitting antenna to calibration receiving antenna).

For the first estimation method, after superimposing the time domain integrated calibration pilot signal of each group, carry out FFT to acquire $X'(k)$, and use the time domain relevant algorithm to estimate the frequency response $H_{i\_m}(k_m)$ of the corresponding sub-carrier of each group of each transmitting calibration channel according to the frequency domain pilot signal of each transmitting calibration channel:

$$H_{i\_m}(k_m) = \frac{X'(k_m)}{r^{(i)}(\lfloor k_m/M \rfloor)}, \qquad k_m = m, m+M, m+2\times M, \cdots m+(N_{cr}-1)\times M$$

For the second estimation method, carry out FFT on the recovered integrated time domain calibration signal $x'_m(n)$ of each group to acquire $X'_m(k)$, and use the time domain relevant algorithm to estimate the frequency response $H_{i\_m}(k_m)$ of the corresponding sub-carrier of each group of each transmitting calibration channel according to the frequency domain pilot signal of each transmitting calibration channel:

$$H_{i\_m}(k_m) = \frac{X'_m(k_m)}{r^{(i)}(\lfloor k_m/M \rfloor)}, \qquad k_m = m, m+M, m+2\times M, \cdots m+(N_{cr}-1)\times M$$

Preferably, in order to further improve the accuracy of channel estimation, the frequency response $H_{i\_m}(k_m)$ of the sub-carrier can be acquired by further noise reduction processing in time domain.

4. Acquire the frequency response of all sub-carriers of each transmitting calibration channel.

S308: the receiving end synthesizes the frequency responses estimated by various sub-carrier groups to acquire the frequency response $H_i(k)$ of all sub-carriers of each transmitting calibration channel.
For the first synthesizing method: direct combination method:

$$H_i(k) = H_{i\_m}(k), \quad k \bmod M = m, \quad k = 1,2...,N_{ca}$$

For the second synthesizing method, firstly interpolate the frequency response $H_{i\_m}(k_m)$ of the existing sub-carriers of each group to acquire the frequency response $H_{i\_m}(k), k=1,2,...,N_{ca}$ of all sub-carriers of this group; and then average the frequency response to acquire the frequency response $H_i(k)$ of all sub-carriers of each transmitting calibration channel among groups:

$$H_i(k) = \frac{1}{M}\sum_{m=1}^{M} H_{i\_m}(k), \qquad k = 1,2...,N_{ca}$$

For the third synthesizing method, randomly select and interpolate the frequency response $H_{i\_m}(k_m)$ of one group of sub-carriers to acquire the frequency response $H_{i\_m}(k), k=1,2,...,N_{ca}$ of all sub-carriers of this group; and then take the frequency response as the frequency response $H_i(k)$ of all sub-carriers of each transmitting calibration channel.

5. Estimate and smooth the frequency response of sub-carriers of each transmitting calibration channel

S309: acquire $N$ estimated frequency responses for all sub-carriers of each transmitting calibration channel, and average $N$ estimation values to acquire the smoothed frequency response $H_{mean\_i}(k)$ of all sub-carriers of each transmitting calibration channel.

6. Calculate the compensation coefficient of each transmitting calibration channel

S310: calculate the compensation coefficient of each transmitting calibration channel according to the smoothed frequency response, and correspondingly compensate each transmitting calibration channel according to the compensation coefficient to make the frequency responses of the transmitting channels consistent. Acquire the mean value of the maximum power $P = \frac{1}{K}\sum_{i=1}^{K_a} \max_k (|H_{mean\_i}(k)|^2)$ of each transmitting calibration channel, and the compensation coefficient in each channel is:

$$C_i(k) = \frac{sqrt(P)}{H_{mean\_i}(k)}$$

Use the corresponding compensation coefficient to compensate the transmitted data to achieve the antenna transmitting calibration function.

In addition, for multi-antenna alternate transmission calibration, the transmitting end uses each transmitting antenna to alternately execute step 305 for sending the calibration signal, and the receiving end repeats executing S306 and S307 at the corresponding time, and estimates the frequency response of each group of each transmitting calibration channel (that is, the channel from each transmitting antenna to calibration receiving antenna).

For multi-antenna group and alternate transmission calibration, the transmitting end uses each group of transmitting antennae to alternately execute step 305 for sending the calibration signal, and the receiving end repeats executing S306 and S307 at the corresponding time, and estimates the frequency response of each group of transmitting calibration channels in each group (that is, the channels from each group of transmitting antennae to calibration receiving antenna).

For the reception calibration, each receiving antenna in the receiving end concurrently executes S306 and S307, and estimates the frequency response of each group of each corresponding receiving calibration channel (that is, the channel from the calibration antenna to each receiving antenna).

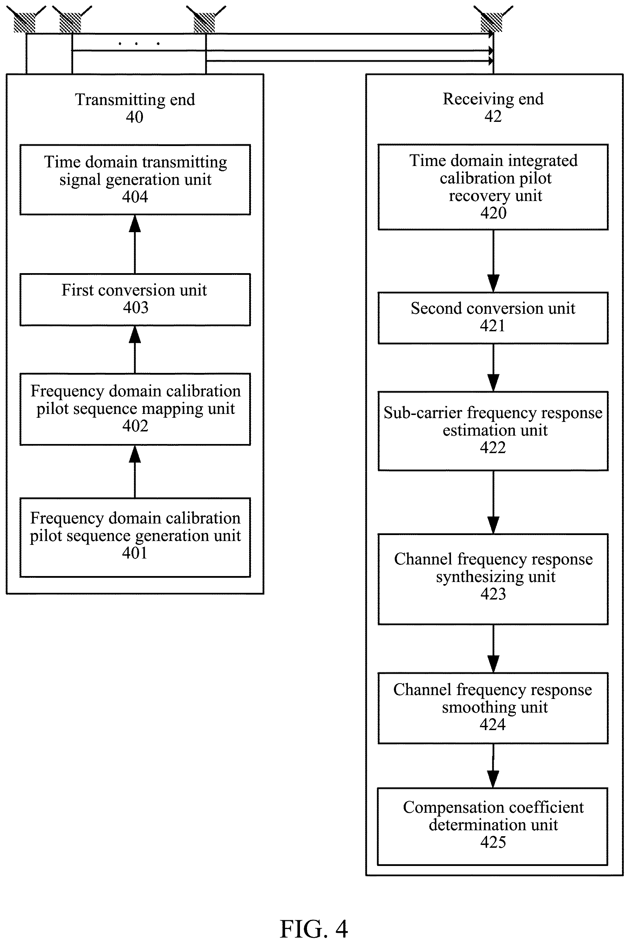

The present invention also provides a system for antenna calibration, as shown in FIG. 4 that is a block diagram of the system for antenna calibration in accordance with an example of the present invention, the system for antenna calibration in accordance with an example of the present invention comprises: a transmitting end 40, for example a transmitter; and a receiving end 42, for example a receiver. Wherein, the transmitting end 40 comprises: a frequency domain calibration pilot sequence generation unit 401, a frequency domain calibration pilot sequence mapping unit 402, a first conversion unit 403, and a time domain transmitting signal generation unit 404; the receiving end 42 comprises a time domain integrated calibration pilot recovery unit 420, a second conversion unit 421, a sub-carrier frequency response estimation unit 422, a channel frequency response synthesizing unit 423, a channel frequency response smoothing unit 424, and a compensation coefficient determination unit 425. In the following, the abovementioned units will be described in detail in combination with FIG. 4.

The frequency domain calibration pilot sequence generation unit 401 connects to the frequency domain calibration pilot sequence mapping unit 402, and is used to group at least one, that is the sub-carrier frequency points of at least one transmitting antenna and determine the frequency domain calibration pilot signal of at least one transmitting antenna according to the group.

The frequency domain calibration pilot sequence mapping unit 402 connects to the first conversion unit 403 and is used to map the frequency domain calibration pilot signal to the corresponding grouped sub-carrier frequency points to acquire the frequency domain signals of at least one transmitting antenna.

The first conversion unit 403 connects to the time domain transmitting signal generation unit 404 and is used to convert the frequency domain signal to the time domain integrated calibration pilot signal of at least one transmitting antenna by IFFT.

The time domain transmitting signal generation unit 404 is used to segment the time domain integrated calibration pilot signal and select any segment of signal as the effective calibration signal, and construct the time domain transmitting signals of at least one transmitting antenna.

The time domain integrated calibration pilot recovery unit 420 is used to restore the time domain transmitting signal to the time domain integrated calibration pilot signal.

The second conversion unit 421 is used to convert the time domain integrated calibration pilot signal to the frequency domain calibration pilot signal.

The sub-carrier frequency response estimation unit 422 is used to determine the frequency domain response of each group according to the frequency domain calibration pilot signal.

The channel frequency response synthesizing unit 423 is used to determine the frequency domain responses of all sub-carrier frequency points of at least one calibration channel according to the frequency domain response of each group.

The channel frequency response smoothing unit 424 is used to average the frequency domain responses of all sub-carrier frequency points of at least one calibration channel which are acquired many times to acquire the mean value of the frequency domain responses of all sub-carriers of at least one calibration channel.

The compensation coefficient determination unit 425 is used to determine the compensation coefficient of at least one calibration channel according to the mean value of multiple calibration channels.

In the following, the processing procedure of the system for antenna calibration performing antenna calibration is described in detail.

Firstly, the frequency domain calibration pilot sequence generation unit 401 determines the number of sub-carrier groups of the transmitting antenna and generates a frequency domain pilot sequence; the frequency domain calibration pilot sequence mapping unit 402 maps the pilot sequence to the corresponding sub-carrier according to the group index set during the grouping, and sends the mapped frequency domain calibration signal to the first conversion unit 403; the first conversion unit 403 carries out IFFT on the frequency domain signal of each transmitting antenna to convert to the time domain for acquiring the time domain integrated calibration pilot signal and sends the signal to the time domain transmitting signal generation unit 404; in the time domain transmitting signal generation unit 404, segment the time domain integrated calibration pilot signal in each transmitting antenna, and randomly select one segment and fills zeros before and after the segment to construct the time domain transmitting signal with GP time length and sends it to the transmitter to send.

In the transmitter, the signals in each transmitting antenna are sent individually, and in the receiver, receive the superimposed time domain transmitting signal transmitted by at least one transmitting antenna, and send the signal to the time domain integrated calibration pilot recovery unit 420; remove zeros from the received signal in the time domain integrated calibration pilot recovery unit 420, and use the regularity of grouping to recover the time domain integrated calibration pilot and sends the pilot to the second conversion unit 421; the second conversion unit 421 converts the recovered time domain integrated calibration pilot signal to the frequency domain signal and sends the frequency domain signal to the sub-carrier frequency response estimation unit 422; use the relevant algorithm to estimate the frequency response at the position of the corresponding sub-carrier of at least one calibration channel in the sub-carrier frequency response estimation unit 422, and send the estimated frequency response to the channel frequency response synthesizing unit 423; the channel frequency response synthesizing unit 423 synthesizes the estimated frequency response of each group in the buffer into the frequency response at the position of all sub-carriers of at least one calibration channel, and sends the frequency response to the channel frequency response smoothing unit 424; the channel frequency response smoothing unit 424 smoothes the frequency responses of all sub-carriers of at least one calibration channel which are acquired many times in the buffer to acquire a smoothed frequency response of all sub-carriers of at least one calibration channel, and sends the frequency response to the compensation coefficient determination unit 425; calculate the compensation coefficient of at least one calibration channel in the compensation coefficient determination unit 425.

To sum up, with the technical scheme of the present invention, use a way of grouping sub-carriers to construct a regular time domain calibration pilot signal to reduce the calibration pilot time domain transmitting time length, so as to solve the problem that the calibration detection pilot signal interferes with the normal communication of the communication system in the prior art, thus the transmission of the antenna calibration pilot signal can avoid the influence from the DwPTS and the UpPTS and improve the calibration estimation precision without affecting the normal communication.

The above description is only a preferred example rather than a restriction of the present invention, and for those skilled in the field, there are different modifications and changes without departing from the scope of the present invention as defined by the appended claims.

**Claims**

1. A method for antenna calibration, wherein the method comprises:

   a transmitting end grouping sub-carrier frequency points in a transmitting antenna and determining a frequency domain calibration pilot signal of the transmitting antenna according to the grouping (S102);
   the transmitting end acquiring a time domain integrated calibration pilot signal according to the frequency domain calibration pilot signal, and using the time domain integrated calibration pilot signal to construct a time domain transmitting signal and sending the time domain transmitting signal to a receiving end (S104);
   the receiving end restoring the received time domain transmitting signal to the time domain integrated calibration pilot signal (S106);
   the receiving end acquiring a frequency domain response of each group according to the time domain integrated calibration pilot signal (SI08), and acquiring frequency domain responses of all sub-carrier frequency points in a calibration channel according to the frequency domain response of each group (S110);
   the receiving end determining a compensation coefficient of the calibration channel according to the frequency domain responses of all sub-carriers (S112);
   wherein, the transmitting end acquires the time domain integrated calibration pilot signal according to the frequency domain calibration pilot signal, and uses the time domain integrated calibration pilot signal to construct the time domain transmitting signal and sends the time domain transmitting signal to the receiving end, specifically comprising:

the transmitting end mapping the frequency domain calibration pilot signals to grouped corresponding sub-carrier frequency points, and filling locations of the rest unmapped sub-carrier frequency points with zero value to acquire a frequency domain signal of the transmitting antenna;

the transmitting end converting the frequency domain signal of the transmitting antenna to the time domain integrated calibration pilot signal of the transmitting antenna;

the transmitting end segmenting the time domain integrated calibration pilot signal of the transmitting antenna according to the number of groups, and selecting any segment of signal therein as an effective calibration signal;

the transmitting end carrying out an operation of filling zeros before and after the effective calibration signal to construct the time domain transmitting signal of the transmitting antenna;

the transmitting end sending the time domain transmitting signal to the receiving end.

2. The method of claim 1, wherein the transmitting end grouping the sub-carrier frequency points in the transmitting antenna specifically comprises:

the transmitting end grouping the sub-carrier frequency points in at least one transmitting antenna.

3. The method of claim 2, wherein when there are at least two said transmitting antennae, after the transmitting end sends the time domain transmitting signal to the receiving end, the method further comprises:

the receiving end superimposing the time domain transmitting signals in one receiving calibration channel to receive.

4. The method of claim 3, wherein the transmitting end groups the sub-carrier frequency points in the transmitting antenna, specifically comprising:

determining a number of groups of grouping the sub-carrier frequency points;

grouping each sub-carrier frequency point in an order from first group to last group in sequence according to frequency sizes of the sub-carrier frequency points, and if the number of the sub-carrier frequency points is greater than the number of groups, allocating the rest sub-carrier frequency points in sequence from the first group to the last group again;

determining the number of the sub-carrier frequency points in each group.

5. The method of claim 4, wherein a total number of the sub-carrier frequency points is exactly divided by the number of the groups.

6. The method of claim 5, wherein the number of the groups is 4 or 8.

7. The method of claim 4, wherein the transmitting end determines the frequency domain calibration pilot signal of the transmitting antenna according to the grouping, specifically comprising:

the transmitting end determining a basic sequence according to the number of the sub-carrier frequency points in each group, and determining the frequency domain calibration pilot signal of the transmitting antenna according to the basic sequence.

8. The method of claim 7, wherein when carrying out multi-channel simultaneous transmission calibration, the method also comprises:

the transmitting end using a way of code division multiplexing to determine the frequency domain calibration pilot signal of each calibration channel.

9. The method of claim 8, wherein a pilot sequence of the code division multiplexing is Zadoff_chu basic sequence.

10. The method of claim 1, wherein the receiving end recovering the time domain integrated calibration pilot signal according to the received time domain transmitting signal comprises:

the receiving end carrying out an operation of removing zeros on the time domain transmitting signal to acquire the effective calibration signal;

EP 2 416 507 B1

the receiving end carrying out recovery processing on the effective calibration signal to acquire the time domain integrated calibration pilot signal.

11. The method of claim 10, wherein the receiving end acquiring the frequency domain response of each group according to a recovered time domain integrated calibration pilot signal comprises:

the receiving end converting the recovered time domain integrated calibration pilot signal to the frequency domain signal;
the receiving end acquiring the frequency domain response of each group in the calibration channel according to a frequency domain pilot of each group in the calibration channel.

12. The method of claim 11, wherein the receiving end acquiring the frequency domain response of each group according to the recovered time domain integrated calibration pilot signal further comprises:

for each receiving antenna, after superimposing the time domain integrated calibration pilot signal of each group, the receiving end performing Fast Fourier Transform to convert to the frequency domain signal of the receiving antenna, and estimating frequency responses of corresponding sub-carriers of each group in the calibration channel according to the frequency domain pilot of each group in the calibration channel;
or, the receiving end carrying out Fast Fourier transform on the time domain integrated calibration pilot signal of each group of each receiving antenna to convert to the frequency domain signal of each group of the receiving antenna, and estimating the frequency responses of the corresponding sub-carriers of each group according to the frequency domain pilot of each group.

13. The method of claim 12, wherein the receiving end acquiring the frequency domain responses of all sub-carrier frequency points according to the frequency domain response of each group comprises:

the receiving end directly combining the frequency domain responses of corresponding frequency points of various sub-carrier frequency point groups for each calibration channel to acquire the frequency domain responses of all sub-carriers; or,
for each calibration channel, the receiving end using a determined frequency response to interpolate sub-carrier frequency points without frequency responses for the frequency response of the sub-carrier frequency points in each group, and averaging a plurality of frequency responses corresponding to each sub-carrier frequency point to acquire the frequency domain responses of all sub-carriers; or,
the receiving end selecting the frequency response of sub-carrier frequency points in one group for each calibration channel and using the determined frequency response to interpolate the sub-carrier frequency points without frequency responses to acquire the frequency domain responses of all sub-carriers.

14. The method of claim 13, wherein after the receiving end acquires the frequency domain responses of all sub-carriers according to the frequency domain response of each group, the method also comprises:

the receiving end repeating the operation of acquiring the frequency domain response of each group and the frequency domain response of all sub-carriers to acquire a plurality of frequency domain responses of all sub-carriers;
the receiving end carrying out an average operation on said a plurality of frequency domain responses of all sub-carriers to acquire a mean value of said a plurality of frequency domain responses of all sub-carriers.

15. The method of claim 14, wherein the receiving end determining the compensation coefficient of the calibration channel according to the frequency domain responses of all sub-carriers comprises:

the receiving end determining the compensation coefficient of the calibration channel according to the mean value.

16. The method of claim 15, wherein after the receiving end determines the compensation coefficient of the calibration channel according to the mean value, the method also comprises:

the receiving end correspondingly compensating the calibration channel according to the compensation coefficient.

**17.** A system for antenna calibration, the system comprises a transmitting end (40) and a receiving end (42), wherein, the transmitting end (40) is used to group sub-carrier frequency points in a transmitting antenna and determine a frequency domain calibration pilot signal of the transmitting antenna according to the group; and acquire a time domain integrated calibration pilot signal according to the frequency domain calibration pilot signal and use the time domain integrated calibration pilot signal to construct a time domain transmitting signal and send the time domain transmitting signal to the receiving end (42);

the receiving end (42) is used to restore the received time domain transmitting signal to the time domain integrated calibration pilot signal, and acquire a frequency domain response of each group according to the time domain integrated calibration pilot signal, and acquire the frequency domain response of all sub-carrier frequency points of a calibration channel according to the frequency domain response of each group, and determine a compensation coefficient of the calibration channel according to the frequency domain response of all sub-carriers;

wherein, the transmitting end (40) is used to acquire the time domain integrated calibration pilot signal according to the frequency domain calibration pilot signal, and use the time domain integrated calibration pilot signal to construct the time domain transmitting signal and send the time domain transmitting signal to the receiving end (42) by the following way:

> mapping the frequency domain calibration pilot signals to grouped corresponding sub-carrier frequency points, and filling locations of the rest unmapped sub-carrier frequency points with zero value to acquire a frequency domain signal of the transmitting antenna;
>
> converting the frequency domain signal of the transmitting antenna to the time domain integrated calibration pilot signal of the transmitting antenna;
>
> segmenting the time domain integrated calibration pilot signal of the transmitting antenna according to the number of groups, and selecting any segment of signal therein as an effective calibration signal;
>
> carrying out an operation of filling zeros before and after the effective calibration signal to construct the time domain transmitting signal of the transmitting antenna; and
>
> sending the time domain transmitting signal to the receiving end (42).

**18.** The system of claim 17, wherein the transmitting end comprises:

> a frequency domain calibration pilot sequence generation unit (401) used to group the sub-carrier frequency points of at least one transmitting antenna and determine the frequency domain calibration pilot signal of said at least one transmitting antenna according to the group;
>
> a frequency domain calibration pilot sequence mapping unit (402), used to map the frequency domain calibration pilot signal to a grouped corresponding sub-carrier frequency point to acquire a frequency domain signal of said at least one transmitting antenna;
>
> a first conversion unit (403), used to convert the frequency domain signal to the time domain integrated calibration pilot signal of said at least one transmitting antenna;
>
> a time domain transmitting signal generation unit (404) used to segment the time domain integrated calibration pilot signal, and select any segment of signal therein as an effective calibration signal and construct the time domain transmitting signal of said at least one transmitting antenna.

**19.** The system of claim 17 or 18, wherein the receiving end comprises:

> a time domain calibration pilot recovery unit (420), used to restore the time domain transmitting signal to the time domain integrated calibration pilot signal;
>
> a second conversion unit (421), used to convert the time domain integrated calibration pilot signal to the frequency domain signal;
>
> a sub-carrier frequency response estimation unit (422), used to determine the frequency domain response of each group according to the frequency domain signal;
>
> a channel frequency response synthesizing unit (423), used to determine the frequency domain responses of all sub-carrier frequency points in at least one calibration channel according to the frequency domain response of each group;
>
> a channel frequency response smoothing unit (424), used to carry out an average operation on the frequency domain responses of all sub-carrier frequency points of at least one calibration channel which are acquired many times to acquire a mean value of the frequency domain responses of all sub-carriers of at least one calibration channel;
>
> a compensation coefficient determination unit (425), used to determine the compensation coefficient of at least one calibration channel according to the mean value of a plurality of calibration channels.

**Patentansprüche**

1. Verfahren zur Antennenkalibration, wobei das Verfahren Folgendes umfasst:

    ein Sendeende gruppiert Subträgerfrequenzpunkte in einer Sendeantenne und bestimmt ein Frequenzbereich-Kalibrationspilotsignal der Sendeantenne gemäß der Gruppierung (S102);
    das Sendeende erfasst ein integriertes Zeitbereich-Kalibrationspilotsignal gemäß dem Frequenzbereich-Kalibrationspilotsignal und
    verwendet das integrierte Zeitbereich-Kalibrationspilotsignal, um ein Zeitbereich-Sendesignal zu erstellen, und sendet das Zeitbereich-Sendesignal zu einem Empfangsende (S104) ;
    das Empfangsende stellt das empfangene Zeitbereich-Sendesignal wieder zum integrierten Zeitbereich-Kalibrationspilotsignal her (S106);
    das Empfangsende erfasst eine Frequenzbereichsantwort jeder Gruppe gemäß dem integrierten Zeitbereich-Kalibrationspilotsignal (S108) und erfasst Frequenzbereichsantworten aller Subträgerfrequenzpunkte in einem Kalibrationskanal gemäß der Frequenzbereichsantwort jeder Gruppe (S110) ;
    das Empfangsende bestimmt einen Kompensationskoeffizienten des Kalibrationskanals gemäß den Frequenzbereichsantworten aller Subträger (S112);
    wobei, dass das Sendeende das integrierte Zeitbereich-Kalibrationspilotsignal gemäß dem Frequenzbereich-Kalibrationspilotsignal erfasst und das integrierte Zeitbereich-Kalibrationspilotsignal verwendet, um das Zeitbereich-Sendesignal zu erstellen, und das Zeitbereich-Sendesignal zum Empfangsende sendet, spezifisch Folgendes umfasst:

        das Sendeende bildet die Frequenzbereich-Kalibrationspilotsignale zu gruppierten entsprechenden Subträgerfrequenzpunkten ab und füllt Positionen der restlichen nicht abgebildeten Subträgerfrequenzpunkte mit Nullwerten, um ein Frequenzbereichssignal der Sendeantenne zu erfassen;
        das Sendeende wandelt das Frequenzbereichssignal der Sendeantenne in das integrierte Zeitbereich-Kalibrationspilotsignal der Sendeantenne um;
        das Sendeende segmentiert das integrierte Zeitbereich-Kalibrationspilotsignal der Sendeantenne gemäß der Anzahl von Gruppen und wählt ein beliebiges Signalsegment darin als ein effektives Kalibrationssignal aus;
        das Sendeende führt eine Operation des Füllens von Nullen vor und nach dem effektiven Kalibrationssignal aus, um das Zeitbereich-Sendesignal der Sendeantenne zu erstellen;
        das Sendeende sendet das Zeitbereich-Sendesignal zum Empfangsende.

2. Verfahren nach Anspruch 1, wobei, dass das Sendeende die Subträgerfrequenzpunkte in der Sendeantenne gruppiert, spezifisch Folgendes umfasst:

    das Sendeende gruppiert die Subträgerfrequenzpunkte in mindestens einer Sendeantenne.

3. Verfahren nach Anspruch 2, wobei, wenn es mindestens zwei der Sendeantennen gibt, das Verfahren, nachdem das Sendeende das Zeitbereich-Sendesignal zum Empfangsende sendet, ferner Folgendes umfasst:

    das Sendeende überlagert die Zeitbereich-Sendesignale in einem Empfangskalibrationskanal zum Empfangen.

4. Verfahren nach Anspruch 3, wobei, dass das Sendeende die Subträgerfrequenzpunkte in der Sendeantenne gruppiert, spezifisch Folgendes umfasst:

    Bestimmen einer Anzahl von Gruppen der Gruppierung der Subträgerfrequenzpunkte;
    Gruppieren jedes Subträgerfrequenzpunkts in einer Reihenfolge von einer ersten Gruppe zu einer letzten Gruppe der Reihe nach gemäß Frequenzgrößen der Subträgerfrequenzpunkte und, falls die Anzahl der Subträgerfrequenzpunkte größer als die Anzahl von Gruppen ist, erneutes Zuweisen der restlichen Subträgerfrequenzpunkte der Reihe nach von der ersten Gruppe zur letzten Gruppe;
    Bestimmen der Anzahl der Subträgerfrequenzpunkte in jeder Gruppe.

5. Verfahren nach Anspruch 4, wobei eine Gesamtanzahl der Subträgerfrequenzpunkte genau durch die Anzahl der Gruppen geteilt wird.

6. Verfahren nach Anspruch 5, wobei die Anzahl der Gruppen 4 oder 8 ist.

7. Verfahren nach Anspruch 4, wobei, dass das Sendeende das Frequenzbereich-Kalibrationspilotsignal der Sendeantenne gemäß der Gruppierung bestimmt, spezifisch Folgendes umfasst:

das Sendeende bestimmt eine Grundsequenz gemäß der Anzahl der Subträgerfrequenzpunkte in jeder Gruppe und bestimmt das Frequenzbereich-Kalibrationspilotsignal der Sendeantenne gemäß der Grundsequenz.

8. Verfahren nach Anspruch 7, wobei, wenn eine gleichzeitige Mehrkanal-Übertragungskalibration ausgeführt wird, das Verfahren außerdem Folgendes umfasst:

das Sendeende verwendet eine Weise des Codemultiplexing, um das Frequenzbereich-Kalibrationspilotsignal jedes Kalibrationskanals zu bestimmen.

9. Verfahren nach Anspruch 8, wobei eine Pilotsequenz des Codemultiplexing eine Zadoff-Chu-Grundsequenz ist.

10. Verfahren nach Anspruch 1, wobei, dass das Empfangsende das integrierte Zeitbereich-Kalibrationspilotsignal gemäß dem empfangenen Zeitbereich-Sendesignal wiederherstellt, Folgendes umfasst:

das Empfangsende führt eine Operation des Entfernens von Nullen am Zeitbereich-Sendesignal aus, um das effektive Kalibrationssignal zu erfassen;
das Empfangsende führt eine Wiederherstellungsverarbeitung am effektiven Kalibrationssignal aus, um das integrierte Zeitbereich-Kalibrationspilotsignal zu erfassen.

11. Verfahren nach Anspruch 10, wobei, dass das Empfangsende die Frequenzbereichsantwort jeder Gruppe gemäß einem wiederhergestellten integrierten Zeitbereich-Kalibrationspilotsignal erfasst, Folgendes umfasst:

das Empfangsende wandelt das wiederhergestellte integrierte Zeitbereich-Kalibrationspilotsignal in das Frequenzbereichssignal um;
das Empfangsende erfasst die Frequenzbereichsantwort jeder Gruppe im Kalibrationskanal gemäß einem Frequenzbereichspiloten jeder Gruppe im Kalibrationskanal.

12. Verfahren nach Anspruch 11, wobei, dass das Empfangsende die Frequenzbereichsantwort jeder Gruppe gemäß dem wiederhergestellten integrierten Zeitbereich-Kalibrationspilotsignal erfasst, ferner Folgendes umfasst:

das Empfangsende führt, für jede Empfangsantenne, nach dem Überlagern des integrierten Zeitbereich-Kalibrationspilotsignals jeder Gruppe, eine schnelle Fourier-Transformation durch, um zum Frequenzbereichssignal der Empfangsantenne umzuwandeln, und schätzt Frequenzantworten entsprechender Subträger jeder Gruppe im Kalibrationskanal gemäß dem Frequenzbereichspiloten jeder Gruppe im Kalibrationskanal;
oder das Empfangsende führt eine schnelle Fourier-Transformation am integrierten Zeitbereich-Kalibrationspilotsignal jeder Gruppe jeder Empfangsantenne aus, um zum Frequenzbereichssignal jeder Gruppe der Empfangsantenne umzuwandeln, und schätzt die Frequenzantworten der entsprechenden Subträger jeder Gruppe gemäß dem Frequenzbereichspiloten jeder Gruppe.

13. Verfahren nach Anspruch 12, wobei, dass das Empfangsende die Frequenzbereichsantworten aller Subträgerfrequenzpunkte gemäß der Frequenzbereichsantwort jeder Gruppe erfasst, Folgendes umfasst:

das Empfangsende kombiniert die Frequenzbereichsantworten entsprechender Frequenzpunkte verschiedener Subträgerfrequenzpunktgruppen für jeden Kalibrationskanal direkt, um die Frequenzbereichsantworten aller Subträger zu erfassen; oder,
das Empfangsende verwendet, für jeden Kalibrationskanal, eine bestimmte Frequenzantwort, um Subträgerfrequenzpunkte ohne Frequenzantworten für die Frequenzantworten der Subträgerfrequenzpunkte in jeder Gruppe zu interpolieren, und mittelt mehrere Frequenzantworten, die jedem Subträgerfrequenzpunkt entsprechen, um die Frequenzbereichsantworten aller Subträger zu erfassen; oder
das Empfangsende wählt die Frequenzantwort von Subträgerfrequenzpunkten in einer Gruppe für jeden Kalibrationskanal aus und verwendet die bestimmte Frequenzantwort, um die Subträgerfrequenzpunkte ohne Frequenzantworten zu interpolieren, sodass die Frequenzbereichsantworten aller Subträger erfasst werden.

14. Verfahren nach Anspruch 13, wobei das Verfahren, nachdem das Empfangsende die Frequenzbereichsantworten aller Subträger gemäß der Frequenzbereichsantwort jeder Gruppe erfasst, außerdem Folgendes umfasst:

das Empfangsende wiederholt die Operation des Erfassens der Frequenzbereichsantwort jeder Gruppe und der Frequenzbereichsantwort aller Subträger, um mehrere Frequenzbereichsantworten aller Subträger zu erfassen;

das Empfangsende führt eine Mittelwertbildungsoperation an den mehreren Frequenzbereichsantworten aller Subträger aus, um einen Mittelwert der mehreren Frequenzbereichsantworten aller Subträger zu erfassen.

15. Verfahren nach Anspruch 14, wobei, dass das Empfangsende den Kompensationskoeffizienten des Kalibrationskanals gemäß den Frequenzbereichsantworten aller Subträger bestimmt, Folgendes umfasst:

das Empfangsende bestimmt den Kompensationskoeffizienten des Kalibrationskanals gemäß dem Mittelwert.

16. Verfahren nach Anspruch 15, wobei das Verfahren, nachdem das Empfangsende den Kompensationskoeffizienten des Kalibrationskanals gemäß dem Mittelwert bestimmt, außerdem Folgendes umfasst:

das Empfangsende kompensiert dementsprechend den Kalibrationskanal gemäß dem Kompensationskoeffizienten.

17. System zur Antennenkalibration, wobei das System ein Sendeende (40) und ein Empfangsende (42) umfasst, wobei:

das Sendeende (40) dazu verwendet wird, Subträgerfrequenzpunkte in einer Sendeantenne zu gruppieren und ein Frequenzbereich-Kalibrationspilotsignal der Sendeantenne gemäß der Gruppe zu bestimmen und ein integriertes Zeitbereich-Kalibrationspilotsignal gemäß dem Frequenzbereich-Kalibrationspilotsignal zu erfassen und das integrierte Zeitbereich-Kalibrationspilotsignal zu verwenden, um ein Zeitbereich-Sendesignal zu erstellen, und das Zeitbereich-Sendesignal zum Empfangsende (42) zu senden;

das Empfangsende (42) dazu verwendet wird, das empfangene Zeitbereich-Sendesignal zum integrierten Zeitbereich-Kalibrationspilotsignal wiederherzustellen und eine Frequenzbereichsantwort jeder Gruppe gemäß dem integrierten Zeitbereich-Kalibrationspilotsignal zu erfassen und die Frequenzbereichsantwort aller Subträgerfrequenzpunkte eines Kalibrationskanals gemäß der Frequenzbereichsantwort jeder Gruppe zu erfassen und einen Kompensationskoeffizienten des Kalibrationskanals gemäß der Frequenzbereichsantwort aller Subträger zu bestimmen;

wobei das Sendeende (40) dazu verwendet wird, das integrierte Zeitbereich-Kalibrationspilotsignal gemäß dem Frequenzbereich-Kalibrationspilotsignal zu erfassen und das integrierte Zeitbereich-Kalibrationspilotsignal zu verwenden, um das Zeitbereich-Sendesignal zu erstellen, und das Zeitbereich-Sendesignal zum Empfangsende (42) auf die folgende Weise zu senden:

Abbilden der Frequenzbereich-Kalibrationspilotsignale zu gruppierten entsprechenden Subträgerfrequenzpunkten und Füllen von Positionen der restlichen nicht abgebildeten Subträgerfrequenzpunkte mit Nullwerten, um ein Frequenzbereichssignal der Sendeantenne zu erfassen;

Umwandeln des Frequenzbereichssignals der Sendeantenne in das integrierte Zeitbereich-Kalibrationspilotsignal der Sendeantenne;

Segmentieren des integrierten Zeitbereich-Kalibrationspilotsignals der Sendeantenne gemäß der Anzahl von Gruppen und Auswählen eines beliebigen Signalsegments darin als ein effektives Kalibrationssignal;

Ausführen einer Operation des Füllens von Nullen vor und nach dem effektiven Kalibrationssignal, um das Zeitbereich-Sendesignal der Sendeantenne zu erstellen; und

Senden des Zeitbereich-Sendesignals zum Empfangsende (42).

18. System nach Anspruch 17, wobei das Sendeende Folgendes umfasst:

eine Frequenzbereich-Kalibrationspilotsequenz-Erzeugungseinheit (401), die dazu verwendet wird, die Subträgerfrequenzpunkte von mindestens einer Sendeantenne zu gruppieren und das Frequenzbereich-Kalibrationspilotsignal der mindestens einen Sendeantenne gemäß der Gruppe zu bestimmen;

eine Frequenzbereich-Kalibrationspilotsequenz-Abbildungseinheit (402), die dazu verwendet wird, das Frequenzbereich-Kalibrationspilotsignal zu einem gruppierten entsprechenden Subträgerfrequenzpunkt abzubilden, um ein Frequenzbereichssignal der mindestens einen Sendeantenne zu erfassen;

eine erste Umwandlungseinheit (403), die dazu verwendet wird, das Frequenzbereichssignal in das integrierte Zeitbereich-Kalibrationspilotsignal der mindestens einen Sendeantenne umzuwandeln;

eine Zeitbereich-Sendesignal-Erzeugungseinheit (404), die dazu verwendet wird, das integrierte Zeitbereich-Kalibrationspilotsignal zu segmentieren und ein beliebiges Signalsegment darin als ein effektives Kalibrationssignal auszuwählen und das Zeitbereich-Sendesignal der mindestens einen Sendeantenne zu erstellen.

**19.** System nach Anspruch 17 oder 18, wobei das Empfangsende Folgendes umfasst:

eine Zeitbereich-Kalibrationspilot-Wiederherstellungseinheit (420), die dazu verwendet wird, das Zeitbereich-Sendesignal zum integrierten Zeitbereich-Kalibrationspilotsignal wiederherzustellen;
eine zweite Umwandlungseinheit (421), die dazu verwendet wird, das integrierte Zeitbereich-Kalibrationspilotsignal in das Frequenzbereichssignal umzuwandeln;
eine Subträgerfrequenzantwort-Schätzungseinheit (422), die dazu verwendet wird, die Frequenzbereichsantwort jeder Gruppe gemäß dem Frequenzbereichssignal zu bestimmen;
eine Kanalfrequenzantwort-Synthetisiereinheit (423), die dazu verwendet wird, die Frequenzbereichsantworten aller Subträgerfrequenzpunkte in mindestens einem Kalibrationskanal gemäß der Frequenzbereichsantwort jeder Gruppe zu bestimmen;
eine Kanalfrequenzantwort-Glättungseinheit (424), die dazu verwendet wird, eine Mittelwertbildungsoperation an den Frequenzbereichsantworten aller Subträgerfrequenzpunkte von mindestens einem Kalibrationskanal, die viele Male erfasst werden, auszuführen, um einen Mittelwert der Frequenzbereichsantworten aller Subträger von mindestens einem Kalibrationskanal zu erfassen;
eine Kompensationskoeffizient-Bestimmungseinheit (425), die dazu verwendet wird, den Kompensationskoeffizienten von mindestens einem Kalibrationskanal gemäß dem Mittelwert mehrerer Kalibrationskanäle zu bestimmen.

## Revendications

**1.** Procédé d'étalonnage d'antenne, dans lequel le procédé comprend les étapes suivantes :

une extrémité de transmission regroupe des points de fréquence de sous-porteuse dans une antenne de transmission et détermine un signal pilote d'étalonnage de domaine fréquentiel de l'antenne de transmission en fonction du regroupement (S102) ;
l'extrémité de transmission acquiert un signal pilote d'étalonnage intégré de domaine temporel en fonction du signal pilote d'étalonnage de domaine fréquentiel et utilise le signal pilote d'étalonnage intégré de domaine temporel pour construire un signal de transmission de domaine temporel et envoyant le signal de transmission de domaine temporel à une extrémité de réception (S104) ;
l'extrémité de réception restaure le signal de transmission de domaine temporel en signal pilote d'étalonnage intégré de domaine temporel (S106) ;
l'extrémité de réception acquiert une réponse de domaine fréquentiel de chaque groupe en fonction du signal pilote d'étalonnage intégré de domaine temporel (S108) et acquiert des réponses de domaine fréquentiel de tous les points de fréquence de sous-porteuse dans un canal d'étalonnage en fonction de la réponse de domaine fréquentiel de chaque groupe (S110) ;
l'extrémité de réception détermine un coefficient de compensation du canal d'étalonnage en fonction des réponses de domaine fréquentiel de toutes les sous-porteuses (S112) ;
dans lequel l'étape au cours de laquelle l'extrémité de transmission acquiert le signal pilote d'étalonnage intégré de domaine temporel en fonction du signal pilote d'étalonnage de domaine fréquentiel et utilise le signal pilote d'étalonnage intégré de domaine temporel pour construire le signal de transmission de domaine temporel et envoie le signal de transmission de domaine temporel à l'extrémité de réception, comprend de façon précise les étapes suivantes :

l'extrémité de transmission met en correspondance les signaux pilotes d'étalonnage de domaine fréquentiel avec des points de fréquence de sous-porteuse correspondants regroupés et remplissant des emplacements des points de fréquence de sous-porteuse restants non mis en correspondance avec une valeur nulle pour acquérir un signal de domaine fréquentiel de l'antenne de transmission ;
l'extrémité de transmission convertit le signal de domaine fréquentiel de l'antenne de transmission en signal pilote d'étalonnage intégré de domaine temporel de l'antenne de transmission ;
l'extrémité de transmission segmente le signal pilote d'étalonnage intégré de domaine temporel de l'antenne de transmission en fonction du nombre de groupes et sélectionnant n'importe quel segment d'un signal en son sein en tant que signal d'étalonnage efficace ;
l'extrémité de transmission effectue une opération de remplissage de zéros avant et après le signal d'étalonnage efficace pour construire le signal de transmission de domaine temporel de l'antenne de transmission ;
l'extrémité de transmission envoie le signal de transmission de domaine temporel à l'extrémité de réception.

2. Procédé selon la revendication 1, dans lequel
l'extrémité de transmission regroupant les points de fréquence de sous-porteuse dans l'antenne de transmission comprend de façon précise :

l'extrémité de transmission regroupant les points de fréquence de sous-porteuse dans au moins une antenne de transmission.

3. Procédé selon la revendication 2, dans lequel
lorsqu'il y a au moins deux dites antennes de transmission, après que l'extrémité de transmissions envoie le signal de transmission de domaine temporel à l'extrémité de réception, le procédé comprend en outre l'étape suivante :

l'extrémité de réception superpose les signaux de transmission de domaine temporel dans un seul canal d'étalonnage de réception pour réception.

4. Procédé selon la revendication 3, dans lequel
l'extrémité de transmission regroupe les points de fréquence de sous-porteuse dans l'antenne de transmission, consistant de façon précise :

à déterminer un nombre de groupes de regroupement des points de fréquence de sous-porteuse ;
à regrouper chaque point de fréquence de sous-porteuse selon un ordre allant du premier groupe au dernier groupe en séquence en fonction des tailles de fréquence des points de fréquence de sous-porteuse et, si le nombre de points de fréquence de sous-porteuse est supérieur au nombre de groupes, à attribuer à nouveau les points de fréquence de sous-porteuse restants en séquence du premier groupe au dernier groupe ;
à déterminer le nombre de points de fréquence de sous-porteuse dans chaque groupe.

5. Procédé selon la revendication 4, dans lequel
un nombre total de points de fréquence de sous-porteuse est exactement divisé par le nombre de groupes.

6. Procédé selon la revendication 5, dans lequel le nombre de groupes est de 4 ou de 8.

7. Procédé selon la revendication 4, dans lequel
l'extrémité de transmission détermine le signal pilote d'étalonnage de domaine fréquentiel de l'antenne de transmission en fonction du regroupement, comprenant de façon précise l'étape suivante :

l'extrémité de transmission détermine une séquence de base en fonction du nombre de points de fréquence de sous-porteuse dans chaque groupe et détermine le signal pilote d'étalonnage de domaine fréquentiel de l'antenne de transmission en fonction de la séquence de base.

8. Procédé selon la revendication 7, dans lequel
lors de la réalisation d'un étalonnage de transmission simultané multi-canal, le procédé comprend également l'étape suivante :

l'extrémité de transmission utilise une manière de multiplexage par répartition en code pour déterminer le signal pilote d'étalonnage de domaine fréquentiel de chaque canal d'étalonnage.

9. Procédé selon la revendication 8, dans lequel
une séquence pilote du multiplexage par répartition en code est une séquence de base de Zadoff-chu.

10. Procédé selon la revendication 1, dans lequel
l'extrémité de réception recouvrant le signal pilote d'étalonnage intégré de domaine temporel en fonction du signal de transmission de domaine temporel reçu comprend :

l'extrémité de réception effectue une opération de suppression de zéros sur le signal de transmission de domaine temporel pour acquérir le signal d'étalonnage efficace ;
l'extrémité de réception effectue un traitement de récupération sur le signal d'étalonnage effectif pour acquérir le signal pilote d'étalonnage intégré de domaine temporel.

11. Procédé selon la revendication 10, dans lequel
l'extrémité de réception acquérant la réponse de domaine fréquentiel de chaque groupe en fonction d'un signal pilote d'étalonnage intégré de domaine temporel récupéré comprend :

l'extrémité de réception convertissant le signal pilote d'étalonnage intégré de domaine temporel récupéré en signal de domaine fréquentiel ;
l'extrémité de réception acquérant la réponse de domaine fréquentiel de chaque groupe dans le canal d'étalonnage en fonction d'un pilote de domaine fréquentiel de chaque groupe dans le canal d'étalonnage.

12. Procédé selon la revendication 11, dans lequel
l'extrémité de réception acquérant la réponse de domaine fréquentiel de chaque groupe en fonction du signal pilote d'étalonnage intégré de domaine temporel récupéré comprend en outre :

pour chaque antenne de réception, après superposition du signal pilote d'étalonnage intégré de domaine temporel de chaque groupe, l'extrémité de réception effectuant une transformée de Fourier rapide pour le convertir en signal de domaine fréquentiel de l'extrémité de réception et estimant des réponses de fréquence de sous-porteuses correspondantes de chaque groupe dans le canal d'étalonnage en fonction du pilote de domaine fréquentiel de chaque groupe dans le canal d'étalonnage ;
ou l'extrémité de réception effectuant une transformée de Fourier rapide sur le signal pilote d'étalonnage intégré de domaine temporel de chaque groupe de chaque antenne de réception pour le convertir en signal de domaine fréquentiel de chaque groupe de l'antenne de réception et estimant les réponses de fréquence des sous-porteuses correspondantes de chaque groupe en fonction du pilote de domaine fréquentiel de chaque groupe.

13. Procédé selon la revendication 12, dans lequel
l'extrémité de réception acquérant les réponses de domaine fréquentiel de tous les points de fréquence de sous-porteuse en fonction de la réponse de domaine fréquentiel de chaque groupe comprend :

l'extrémité de réception combinant directement les réponses de domaine fréquentiel de points de fréquence correspondants de divers groupes de points de fréquence de sous-porteuse pour chaque canal d'étalonnage pour acquérir les réponses de domaine fréquentiel de toutes les sous-porteuses ; ou
pour chaque canal d'étalonnage, l'extrémité de réception utilisant une réponse de fréquence déterminée pour interpoler des points de fréquence de sous-porteuse sans réponses de fréquence pour la réponse de fréquence des points de fréquence de sous-porteuse dans chaque groupe et établissant la moyenne d'une pluralité de réponses de fréquence correspondant à chaque point de fréquence de sous-porteuse pour acquérir les réponses de domaine fréquentiel de toutes les sous-porteuses ; ou
l'extrémité de réception sélectionnant la réponse de fréquence de points de fréquence de sous-porteuse dans un groupe pour chaque canal d'étalonnage et utilisant la réponse de fréquence déterminée pour interpoler les points de fréquence de sous-porteuse sans réponses de fréquence pour acquérir les réponses de domaine fréquentiel de toutes les sous-porteuses.

14. Procédé selon la revendication 13, dans lequel
après que l'extrémité de réception acquiert les réponses de domaine fréquentiel de toutes les sous-porteuses en fonction de la réponse de domaine fréquentiel de chaque groupe, le procédé comprend également les étapes suivantes :

l'extrémité de réception répète l'opération d'acquisition de la réponse de domaine fréquentiel de chaque groupe et de la réponse de domaine fréquentiel de toutes les sous-porteuses pour acquérir une pluralité de réponses de domaine fréquentiel de toutes les sous-porteuses ;
l'extrémité de réception effectuant une opération d'établissement de moyenne sur ladite pluralité de réponses de domaine fréquentiel de toutes les sous-porteuses pour acquérir une valeur moyenne de ladite pluralité de réponses de domaine fréquentiel de toutes les sous-porteuses.

15. Procédé selon la revendication 14, dans lequel
l'extrémité de réception déterminant le coefficient de compensation du canal d'étalonnage en fonction des réponses de domaine fréquentiel de toutes les sous-porteuses comprend :

l'extrémité de réception déterminant le coefficient de compensation du canal d'étalonnage en fonction de la valeur moyenne.

**16.** Procédé selon la revendication 15, dans lequel

après que l'extrémité de réception détermine le coefficient de compensation du canal d'étalonnage en fonction de la valeur moyenne, le procédé comprend également l'étape suivante :

l'extrémité de réception compense de manière correspondante le canal d'étalonnage en fonction du coefficient de compensation.

**17.** Système pour un étalonnage d'antenne, le système comprend une extrémité de transmission (40) et une extrémité de réception (42), dans lequel :

l'extrémité de transmission (40) est utilisée pour regrouper des points de fréquence de sous-porteuse dans une antenne de transmission et déterminer un signal pilote d'étalonnage de domaine fréquentiel de l'antenne de transmission en fonction du groupe ; et acquérir un signal pilote d'étalonnage intégré de domaine temporel en fonction du signal pilote d'étalonnage de domaine fréquentiel et utiliser le signal pilote d'étalonnage intégré de domaine temporel pour construire un signal de transmission de domaine temporel et envoyer le signal de transmission de domaine temporel à l'extrémité de réception (42) ;

l'extrémité de réception (42) est utilisée pour restaurer le signal de transmission de domaine temporel en signal pilote d'étalonnage intégré de domaine temporel et acquérir une réponse de domaine fréquentiel de chaque groupe en fonction du signal pilote d'étalonnage intégré de domaine temporel et acquérir la réponse de domaine fréquentiel de tous les points de fréquence de sous-porteuse dans un canal d'étalonnage en fonction de la réponse de domaine fréquentiel de chaque groupe et déterminer un coefficient de compensation du canal d'étalonnage en fonction de la réponse de domaine fréquentiel de toutes les sous-porteuses ;

dans lequel l'extrémité de transmission (40) est utilisée pour acquérir le signal pilote d'étalonnage intégré de domaine temporel en fonction du signal pilote d'étalonnage de domaine fréquentiel et utiliser le signal pilote d'étalonnage intégré de domaine temporel pour construire le signal de transmission de domaine temporel et envoyer le signal de transmission de domaine temporel à l'extrémité de réception (42) de la manière suivante consistant :

à mettre en correspondance les signaux pilotes d'étalonnage de domaine fréquentiel avec des points de fréquence de sous-porteuse correspondants regroupés et à remplir des emplacements des points de fréquence de sous-porteuse restants non mis en correspondance avec une valeur nulle pour acquérir un signal de domaine fréquentiel de l'antenne de transmission ;

à convertir le signal de domaine fréquentiel de l'antenne de transmission en signal pilote d'étalonnage intégré de domaine temporel de l'antenne de transmission ;

à segmenter le signal pilote d'étalonnage intégré de domaine temporel de l'antenne de transmission en fonction du nombre de groupes et à sélectionner n'importe quel segment d'un signal en son sein en tant que signal d'étalonnage efficace ;

à effectuer une opération de remplissage de zéros avant et après le signal d'étalonnage efficace pour construire le signal de transmission de domaine temporel de l'antenne de transmission ; et

à envoyer le signal de transmission de domaine temporel à l'extrémité de réception (42).

**18.** Système selon la revendication 17, dans lequel

l'extrémité de transmission comprend :

une unité de génération de séquence pilote d'étalonnage de domaine fréquentiel (401) utilisée pour regrouper les points de fréquence de sous-porteuse d'au moins une antenne de transmission et déterminer le signal pilote d'étalonnage de domaine fréquentiel de ladite ou desdites antennes de transmission en fonction du groupe ;

une unité de mise en correspondance de séquence pilote d'étalonnage de domaine fréquentiel (402), utilisée pour mettre en correspondance le signal pilote d'étalonnage de domaine fréquentiel avec un point de fréquence de sous-porteuse correspondant regroupé pour acquérir un signal de domaine fréquentiel de ladite ou desdites antennes de transmission ;

une première unité de conversion (403), utilisée pour convertir le signal de domaine fréquentiel en signal pilote d'étalonnage intégré de domaine temporel de ladite ou desdites antennes de transmission ;

une unité de génération de signal de transmission de domaine temporel (404) utilisée pour segmenter le signal pilote d'étalonnage intégré de domaine temporel et sélectionner n'importe quel segment d'un signal en son sein en tant que signal d'étalonnage efficace et construire le signal de transmission de domaine temporel de ladite ou desdites antennes de transmission.

19. Système selon la revendication 17 ou 18, dans lequel l'extrémité de réception comprend :

une unité de récupération de pilote d'étalonnage de domaine temporel (420), utilisée pour restaurer le signal de transmission de domaine temporel en signal pilote d'étalonnage intégré de domaine temporel ;
une seconde unité de conversion (421), utilisée pour convertir le signal pilote d'étalonnage intégré de domaine temporel en signal de domaine fréquentiel ;
une unité d'estimation de réponse de fréquence de sous-porteuse (422), utilisée pour déterminer la réponse de domaine fréquentiel de chaque groupe en fonction du signal de domaine fréquentiel ;
une unité de synthèse de réponse de fréquence de canal (423), utilisée pour déterminer les réponses de domaine fréquentiel de tous les points de fréquence de sous-porteuse dans au moins un canal d'étalonnage en fonction de la réponse de domaine fréquentiel de chaque groupe ;
une unité de lissage de réponse de fréquence de canal (424), utilisée pour effectuer une opération d'établissement de moyenne sur les réponses de domaine fréquentiel de tous les points de fréquence de sous-porteuse d'au moins un canal d'étalonnage qui sont acquis de nombreuses fois pour acquérir une valeur moyenne des réponses de domaine fréquentiel de toutes les sous-porteuses d'au moins un canal d'étalonnage ;
une unité de détermination de coefficient de compensation (425), utilisée pour déterminer le coefficient de compensation d'au moins un canal d'étalonnage en fonction de la valeur moyenne d'une pluralité de canaux d'étalonnage.

Start

The transmitting end groups the sub-carrier frequency points of the transmitting antenna and determines the frequency domain calibration pilot signals of transmitting antenna according to the group — S102

The transmitting end acquires the time domain integrated calibration pilot signal according to the frequency domain calibration pilot signal, and uses the time domain integrated calibration pilot signal to construct a time domain transmitting signal and send the signal to the receiving end — S104

The receiving end restores the received time domain transmitting signal to the time domain integrated calibration pilot signal — S106

The receiving end acquires the frequency domain response of each group according to the time domain integrated calibration pilot signal — S108

Acquiring the frequency domain response of all sub-carrier frequency points of the calibration channel according to the frequency domain response of each group — S110

The receiving end determines the compensation coefficient of the calibration channel according to the frequency domain response of all sub-carriers — S112

End

FIG. 1

| | | | | | | | | | |
|---|---|---|---|---|---|---|---|---|---|
| $f_1$ | 0 | 0 | L | 0 | $f_{M+1}$ | 0 | 0 | L | 0 |
| 0 | $f_2$ | 0 | L | 0 | 0 | $f_{M+2}$ | 0 | L | 0 |
| 0 | 0 | $f_3$ | O | 0 | 0 | 0 | $f_{M+3}$ | O | 0 |
| Λ | Λ | O | O | Λ | Λ | Λ | O | O | Λ |
| 0 | 0 | 0 | L | $f_M$ | 0 | 0 | 0 | L | $f_{N_{ca}}$ |

Frequency

FIG. 2

```
┌─────────────────────────────────┐
│  Allocate the sub-carrier into groups │──── S301
└─────────────────────────────────┘
              │
              ▼
┌─────────────────────────────────┐
│   Generate the frequency domain  │──── S302
│      calibration pilot signal    │
└─────────────────────────────────┘
              │
              ▼
┌─────────────────────────────────┐
│  Map the frequency domain pilot signal │──── S303
└─────────────────────────────────┘
              │
              ▼
┌─────────────────────────────────┐
│  Segment the time domain integrated │──── S304
│      calibration pilot signal    │
└─────────────────────────────────┘
              │
              ▼
┌─────────────────────────────────┐
│   Generate and send the time domain │──── S305
│        transmitting signal       │
└─────────────────────────────────┘
              │
              ▼
┌─────────────────────────────────┐
│  Receive the time domain transmitting │──── S306
│  signal and restore the time domain │
│      calibration pilot signal    │
└─────────────────────────────────┘
              │
              ▼
┌─────────────────────────────────┐
│   Estimate the frequency response of │──── S307
│         the sub-carriers         │
└─────────────────────────────────┘
              │
              ▼
┌─────────────────────────────────┐
│   Synthesize M groups of estimated │──── S308
│        frequency responses       │
└─────────────────────────────────┘
              │
              ▼
┌─────────────────────────────────┐
│  Smooth the N synthesized frequency │──── S309
│             responses            │
└─────────────────────────────────┘
              │
              ▼
┌─────────────────────────────────┐
│  Calculate the compensation coefficient │──── S310
└─────────────────────────────────┘
```

FIG. 3

FIG. 4

**EP 2 416 507 B1**

**Patent documents cited in the description**

- CN 101188448 A
- US 2007037519 A1
- US 2008310529 A1